# EUROPEAN PATENT APPLICATION

(11) **EP 4 717 365 A1**
(43) Date of publication of application: **01.04.2026**
(21) Application number: 25766465.6
(22) Date of filing: 08.08.2025
(51) Int. Cl.: B08B 1/12, H02S 40/10

(54) **CLEANING DEVICE FOR PHOTOVOLTAIC PANEL**

(30) Priority: 08.08.2024 CN 202411083362
(71) Applicant: SHANGHAI INVESTIGATION, DESIGN & RESEARCH INSTITUTE CO., LTD., Shanghai 200434 (CN)
(72) Inventor: WU, Haotian, Shanghai 200434 (CN); LI, Qingxin, Shanghai 200434 (CN); PAN, Zhixuan, Shanghai 200434 (CN); TIAN, Jun, Shanghai 200434 (CN); CHEN, Qinghua, Shanghai 200434 (CN)
(74) Representative: WSL Patentanwälte Partnerschaft mbB
(86) International application number: PCT/CN2025/113413
(87) International publication number: WO 2026/032403

(57) **Abstract**

The present disclosure relates to a device for cleaning a photovoltaic panel. The device is capable of automatically cleaning the photovoltaic panel by using a cleaning liquid, and includes an unmanned vehicle mechanism, a multi-joint robot arm, and a cleaning mechanism, where one end of the multi-joint robot arm is arranged on the unmanned vehicle mechanism, and the other end of the multi-joint robot arm is connected to the cleaning mechanism; and the cleaning mechanism includes a cleaning support frame for providing support, a first electric motor for providing power, a soft brush roller for cleaning the photovoltaic panel, and a spraying assembly for spraying the cleaning liquid, the first electric motor, the soft brush roller, and the spraying assembly are all arranged on the cleaning support frame, an output end of the first electric motor is connected to the soft brush roller and is configured to drive the soft brush roller to rotate, and the spraying assembly is capable of spraying the cleaning liquid onto the soft brush roller.

## Description

### CROSS REFERENCE TO RELATED APPLICATION

The present disclosure claims the benefit of priority to Chinese patent application No. 202411083362.1, filed with the China National Intellectual Property Administration on August 8, 2024 and entitled "Device for Cleaning Photovoltaic Panel", which is incorporated herein in its entirety by reference.

### TECHNICAL FIELD

The present disclosure relates to the technical field of cleaning of photovoltaic panels, and particularly relates to a device for cleaning a photovoltaic panel.

### BACKGROUND

A photovoltaic panel is the most basic and significant mechanism for power generation in a photovoltaic power station. Intensity of sunlight received by the photovoltaic panel will directly affect output power of a solar panel. However, most photovoltaic power stations are built in sandy lands, hardened lands, saline-alkali lands, hills, and so on. These places have poor natural environments in which sand and dust are blown by the wind seriously. Most severely, photovoltaic panels are blocked by dust and gravel. Accordingly, not only efficiency of power generation will be reduced, but also a hot spot effect and acid and alkali corrosion will be caused, greatly shortening service life of the photovoltaic panels.

At present, large-scale photovoltaic panels at photovoltaic power stations are cleaned mainly by using water spraying apparatuses and in combination with manual operation. Specifically, workers directly hold water cannons to spray and clean the photovoltaic panels. However, this method has plenty of problems. For example, 1. Through the manual operation, it is difficult to ensure uniformity of cleaning, and some areas cannot be thoroughly cleaned, which greatly affects the efficiency of power generation of the photovoltaic panels. 2. The manual operation is likely to be limited by weather, working time, and other factors, making all-weather cleaning unachievable. 3. Since the manual operation is inefficient, it is difficult to complete cleaning at high efficiency.

### SUMMARY OF THE INVENTION

In view of the above defects of the prior art, the technical problem to be solved by the present disclosure is to provide a device for cleaning a photovoltaic panel, which is capable of improving efficiency and uniformity of cleaning the photovoltaic panel and achieving all-weather cleaning.

In order to achieve the above objective, the present disclosure provides a device for cleaning a photovoltaic panel. The device is capable of automatically cleaning the photovoltaic panel by using a cleaning liquid, and includes an unmanned vehicle mechanism, a multi-joint robot arm, and a cleaning mechanism. One end of the multi-joint robot arm is arranged on the unmanned vehicle mechanism, and the other end of the multi-joint robot arm is connected to the cleaning mechanism. The cleaning mechanism includes a cleaning support frame for providing support, a first electric motor for providing power, a soft brush roller for cleaning the photovoltaic panel, and a spraying assembly for spraying the cleaning liquid. The first electric motor, the soft brush roller, and the spraying assembly are all arranged on the cleaning support frame. An output end of the first electric motor is connected to the soft brush roller and is configured to drive the soft brush roller to rotate. The spraying assembly is capable of spraying the cleaning liquid onto the soft brush roller.

Optionally, the spraying assembly includes a liquid storage tank, a micro pump, a connection tube, a liquid outlet tube, and a plurality of liquid outlet nozzles. The liquid storage tank is arranged on the cleaning support frame. The micro pump is arranged on the liquid storage tank. An inlet end of the micro pump is in communication with the liquid storage tank. One end of the connection tube is connected to an outlet end of the micro pump, and the other end of the connection tube is connected to the liquid outlet tube. A length direction of the liquid outlet tube is parallel to a length direction of the soft brush roller. The plurality of liquid outlet nozzles are arranged on the liquid outlet tube. The liquid outlet nozzles are uniformly distributed in a length extension direction of the liquid outlet tube.

Optionally, the device further includes a water absorption mechanism arranged on a rear side of the cleaning mechanism. The water absorption mechanism includes a water absorption support frame, a sponge assembly, and a drainage assembly. The sponge assembly and the drainage assembly are both arranged on the water absorption support frame. The water absorption support frame is fixedly connected to a rear side of the cleaning support frame. The sponge assembly is connected to the water absorption support frame. The sponge assembly is capable of absorbing the cleaning liquid on the photovoltaic panel. The drainage assembly is capable of draining the cleaning liquid absorbed in the sponge assembly.

Optionally, the sponge assembly includes a transverse connection bar and a sponge. The transverse connection bar is arranged on the water absorption support frame. The sponge is detachably connected to the transverse connection bar.

Optionally, the drainage assembly includes a drainage screw rod, a movable block, a second electric motor, inclined rods, and drainage rollers. The drainage screw rod is arranged on the water absorption support frame and located above the sponge assembly. The movable block is sleeved on the drainage screw rod and is in threaded connection with the drainage screw rod. An output end of the second electric motor is connected to one end of the drainage screw rod and is configured to drive the drainage screw rod to rotate. When the drainage screw rod rotates, the movable block is capable of moving in a length extension direction of the drainage screw rod. The drainage screw rod is parallel to a length direction of the sponge assembly. Two inclined rods are respectively arranged at a front side and a rear side of the movable block. One end of each inclined rod is fixedly connected to the movable block, and the other end of each inclined rod is connected to the rotatable drainage roller. The sponge is located between the two drainage rollers. The two drainage rollers are closely fitted to two side surfaces of the sponge respectively.

Optionally, the device further includes a drying mechanism arranged at a rear side of the water absorption mechanism. The drying mechanism includes a drying support frame for providing support, a distance adjustment assembly for adjusting a distance between the drying mechanism and the water absorption mechanism, and a drying assembly for drying the photovoltaic panel. The drying assembly is arranged on the drying support frame. The distance adjustment assembly is connected to both the drying support frame and the water absorption support frame and is capable of adjusting a distance between the drying support frame and the water absorption support frame.

Optionally, the distance adjustment assembly includes a vertical plate, a slide rod, a distance adjustment screw rod, a third electric motor, and a linkage plate. The vertical plate is fixedly connected to the water absorption mechanism. The linkage plate is fixedly connected to the drying support frame. One end of the slide rod is fixedly connected to the vertical plate, and the other end of the slide rod penetrates the linkage plate. The slide rod is slidably connected to the linkage plate. One end of the distance adjustment screw rod penetrates the vertical plate and is connected to an output end of the third electric motor, and the other end of the distance adjustment screw rod penetrates the linkage plate. The distance adjustment screw rod is in threaded connection with the linkage plate. An axis of the slide rod is parallel to an axis of the distance adjustment screw rod. The third electric motor is capable of driving the distance adjustment screw rod to rotate.

Optionally, the drying assembly includes an air blower, a drying air tube, a plurality of drying air nozzles, a connection air tube, an electric heating wire, and a temperature sensor. The air blower is arranged on the drying support frame. One end of the connection air tube is connected to an air outlet end of the air blower, and the other end of the connection air tube is connected to the drying air tube. The electric heating wire and the temperature sensor are both arranged in the connection air tube. A length extension direction of the drying air tube is parallel to a length extension direction of the soft brush roller of the cleaning mechanism. The plurality of drying air nozzles are arranged on the drying air tube and are uniformly distributed in the length extension direction of the drying air tube.

Optionally, the unmanned vehicle mechanism is set to be a robot with caterpillar tracks.

Optionally, the multi-joint robot arm is set to be a three-joint robot arm.

As mentioned above, the device for cleaning a photovoltaic panel involved in the present disclosure has beneficial effects as follows:
1. By arranging an unmanned vehicle mechanism, a multi-joint robot arm, and a cleaning mechanism, cleaning work is no longer limited by weather, working time, and other factors, all-weather cleaning can be achieved, and cleaning efficiency can be greatly improved. Moreover, the multi-joint robot arm can work almost on any track or at any angle such that the cleaning mechanism can clean all areas of a photovoltaic panel, and uniformity of cleaning the photovoltaic panel can be greatly improved. A soft brush roller and a spraying assembly of the cleaning mechanism cannot damage a surface of the photovoltaic panel such that service life of the photovoltaic panel can be prolonged. Further, dust, dirt, and other pollutants can be more thoroughly removed such that high-efficiency output of the photovoltaic panel can be kept.
2. By arranging the water absorption mechanism, it is ensured that a waste liquid can be rapidly removed and the photovoltaic panel can be kept dry after the photovoltaic panel is cleaned by using the cleaning mechanism. A waste liquid that does not fall off can be absorbed by a sponge assembly, such that residual water droplets or water spots are avoided, and a cleaning effect is ensured. When a large amount of moisture is stored in the sponge assembly, the moisture in the sponge assembly can be drained by using the drainage assembly. Thus, not only can the waste liquid be rapidly treated, but also the surface of the photovoltaic panel can be effectively kept dry to prevent residual water droplets or residual water spots. Moreover, a requirement for manual operation is reduced, the cleaning efficiency is improved, and operating costs are reduced.
3. The photovoltaic panel is dried with hot air by using a drying mechanism, such that it is ensured that the surface of the photovoltaic panel is completely dry. Thus, residual water droplets or residual water spots can be effectively avoided, the photovoltaic panel can be kept clean, and further efficiency and energy output of a photovoltaic system can be improved. Water marks and dirt are not likely to be deposited on the dried surface of the photovoltaic panel such that a cleaning interval can be prolonged, and cleaning frequency and cleaning costs can be reduced. Moreover, the photovoltaic panel can be kept clean and dry by using the drying mechanism such that solar energy can be more effectively absorbed and converted into electric energy by the photovoltaic panel, and reliability and stability of an entire energy system can be improved. Further, the requirement for manual operation is reduced by using the drying mechanism, the cleaning efficiency can be further improved, and the operating costs can be further reduced.

### BRIEF DESCRIPTION OF THE DRAWINGS

FIG. 1 is a schematic structural diagram of a device for cleaning a photovoltaic panel according to the present disclosure.
FIG. 2 is a top view of a cleaning mechanism, a water absorption mechanism, and a drying mechanism in the present disclosure.
FIG. 3 is a bottom view of a cleaning mechanism, a water absorption mechanism, and a drying mechanism in the present disclosure.
FIG. 4 is a sectional view of a water absorption mechanism in the present disclosure.
FIG. 5 is a schematic structural diagram of a water absorption mechanism in the present disclosure.
FIG. 6 is a schematic structural diagram of a drying mechanism in the present disclosure.

### Description of reference numerals:

1. unmanned vehicle mechanism, 2. multi-joint robot arm, 3. cleaning mechanism, 31. cleaning support frame, 32. first electric motor, 33. soft brush roller, 34. spraying assembly, 341. liquid storage tank, 342. micro pump, 343. connection tube, 344. liquid outlet tube, 345. liquid outlet nozzle, 4. water absorption mechanism, 41. water absorption support frame, 42. sponge assembly, 421. transverse connection bar, 422. sponge, 43. drainage assembly, 431. drainage screw rod, 432. movable block, 433. second electric motor, 434. inclined rod, 435. drainage roller, 5. drying mechanism, 51. drying support frame, 52. distance adjustment assembly, 521. vertical plate, 522. slide rod, 523. distance adjustment screw rod, 524. third electric motor, 525. linkage plate, 53. drying assembly, 531. air blower, 532. drying air tube, 533. drying air nozzle, and 534. connection air tube.

### DETAILED DESCRIPTION

Particular implementations of the present disclosure are described below in further detail in combination with accompanying drawings. These implementations are only used for describing the present disclosure, rather than limiting the present disclosure.

In the description of the present disclosure, it should be noted that the orientation or positional relations indicated by the terms "center", "longitudinal", "transverse", "up", "down", "front", "rear", "left", "right", "vertical", "horizontal", "top", "bottom", "inside", "outside", etc. are based on the orientation or positional relations shown in the accompanying drawings, are merely for facilitating the description of the present disclosure and simplifying the description, rather than indicating or implying that a device or element referred to must have a particular orientation or be constructed and operated in a particular orientation, and therefore cannot be interpreted as limiting the present disclosure. In addition, terms "first" and "second" are only used for descriptive purposes, and cannot be construed as indicating or implying relative importance.

In the description of the present disclosure, it should be noted that unless otherwise explicitly specified and defined, the terms "mount", "connected to", and "connect" should be understood in a broad sense. For example, they can denote a fixed connection, a detachable connection, or an integrated connection, denote a mechanical connection, or an electrical connection, denote a direct connection, or an indirect connection via an intermediate medium, or denote communication of interiors of two elements. A person of ordinary skill in the art can understand the specific meanings of the above terms in the present disclosure according to specific situations.

In addition, in the description of the present disclosure, "plurality of" means two or more, unless otherwise specified.

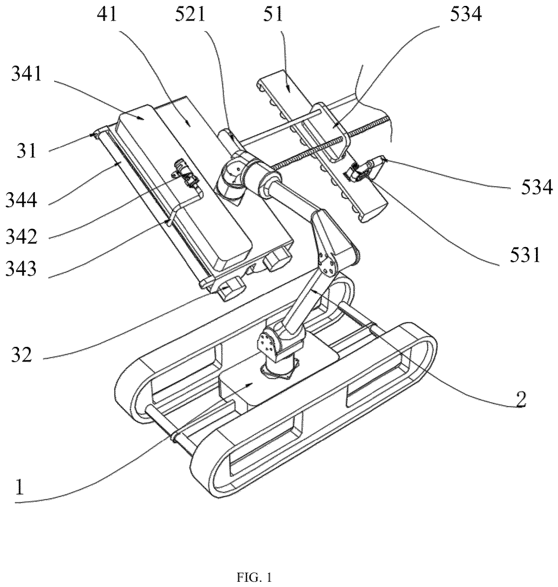

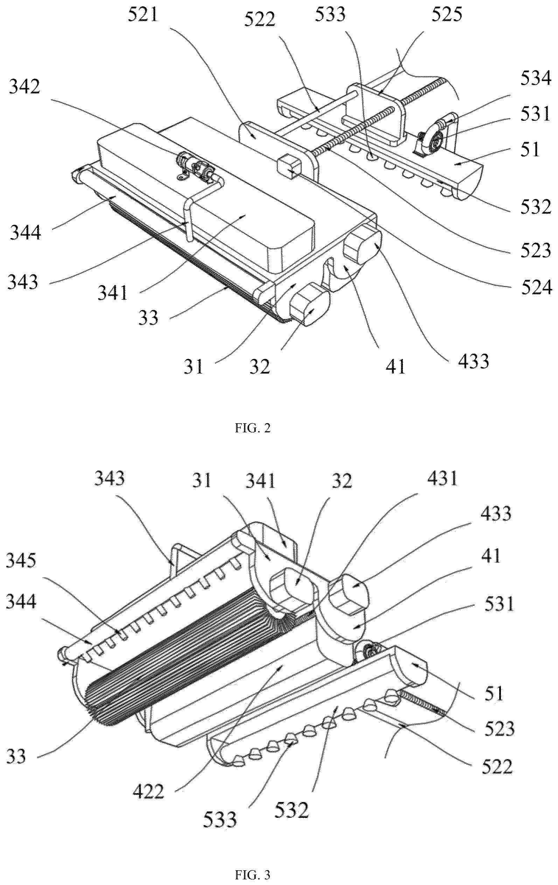

With reference to FIG. 1 to FIG. 6, the present disclosure provides a device for cleaning a photovoltaic panel. The device is capable of automatically cleaning the photovoltaic panel by using a cleaning liquid, and includes an unmanned vehicle mechanism 1, a multi-joint robot arm 2, and a cleaning mechanism 3. One end of the multi-joint robot arm 2 is arranged on the unmanned vehicle mechanism 1, and the other end of the multi-joint robot arm is connected to the cleaning mechanism 3. The cleaning mechanism 3 includes a cleaning support frame 31 for providing support, a first electric motor 32 for providing power, a soft brush roller 33 for cleaning the photovoltaic panel, and a spraying assembly 34 for spraying the cleaning liquid. The first electric motor 32, the soft brush roller 33, and the spraying assembly 34 are all arranged on the cleaning support frame 31. An output end of the first electric motor 32 is connected to the soft brush roller 33 and is configured to drive the soft brush roller 33 to rotate. Optionally, when the first electric motor 32 rotates, the soft brush roller 33 synchronously rotates. The spraying assembly 34 is capable of spraying the cleaning liquid onto the soft brush roller 33.

A basic working principle of the device for cleaning a photovoltaic panel involved in the present disclosure is as follows: when the photovoltaic panel is cleaned, the unmanned vehicle mechanism 1 is moved to a location for cleaning first, and then an angle and a location of the multi-joint robot arm 2 are adjusted to make the cleaning mechanism 3 in contact with a surface of the photovoltaic panel. During the cleaning, the unmanned vehicle mechanism 1 can slowly move. By arranging the unmanned vehicle mechanism 1 and the multi-joint robot arm 2, work of cleaning the photovoltaic panel is no longer limited by weather, working time, and other factors, all-weather cleaning can be achieved, and cleaning efficiency can be greatly improved. Moreover, the multi-joint robot arm 2 can complete working almost at any track or at any angle such that the cleaning mechanism 3 can clean all areas of the photovoltaic panel, and uniformity of cleaning the photovoltaic panel can be greatly improved. By arranging the cleaning mechanism 3, when the first electric motor 32 rotates, the soft brush roller 33 can be driven to rotate together and clean the photovoltaic panel. Moreover, the spraying assembly 34 can spray the cleaning liquid onto the soft brush roller 33 such that the cleaning liquid can be combined with the soft brush roller 33. Thus, the surface of the photovoltaic panel can be gently and effectively cleaned, and dust, dirt, and other pollutants can be more thoroughly removed. High-efficiency conversion of the photovoltaic panel can be kept, and the surface of the photovoltaic panel cannot be damaged. Service life of the photovoltaic panel can be prolonged, and high-efficiency output of the photovoltaic panel can be kept.

With reference to FIG. 1 to FIG. 6, the present disclosure is further described with a particular embodiment as follows:
In the embodiment, with reference to FIG. 1, FIG. 2, and FIG. 3, as an optional design, the spraying assembly 34 includes a liquid storage tank 341, a micro pump 342, a connection tube 343, a liquid outlet tube 344, and a plurality of liquid outlet nozzles 345. The liquid storage tank 341 is arranged on the cleaning support frame 31. The micro pump 342 is arranged on the liquid storage tank 341. An inlet end of the micro pump 342 is in communication with the liquid storage tank 341. One end of the connection tube 343 is connected to an outlet end of the micro pump 342, and the other end of the connection tube is connected to the liquid outlet tube 344. Two ends of the liquid outlet tube 344 are both fixed on the cleaning support frame 31. A length direction of the liquid outlet tube 344 is parallel to a length direction of the soft brush roller 33. The plurality of liquid outlet nozzles 345 are arranged on the liquid outlet tube 344. The liquid outlet nozzles 345 are uniformly distributed in a length extension direction of the liquid outlet tube 344. Openings of the liquid outlet nozzles 345 face the soft brush roller 33, such that spray of the cleaning liquid and rotation of the soft brush roller 33 are combined. Thus, dust, dirt, and other pollutants can be more thoroughly removed, and high-efficiency conversion with the photovoltaic panel can be ensured.

In the embodiment, with reference to FIG. 1, FIG. 2, and FIG. 3, as an optional design, the device further includes a water absorption mechanism 4 arranged on a rear side of the cleaning mechanism 3. The water absorption mechanism 4 includes a water absorption support frame 41, a sponge assembly 42, and a drainage assembly 43. The sponge assembly 42 and the drainage assembly 43 are both arranged on the water absorption support frame 41. The water absorption support frame 41 is fixedly connected to a rear side of the cleaning support frame 31. The sponge assembly 42 is connected to the water absorption support frame 41. The sponge assembly 42 is capable of absorbing the cleaning liquid on the photovoltaic panel. The drainage assembly 43 is capable of draining the cleaning liquid absorbed in the sponge assembly 42. The water absorption mechanism 4 is located at the rear side of the cleaning mechanism 3. When the photovoltaic panel is cleaned by the cleaning mechanism 3, the water absorption mechanism 4 closely follows the cleaning mechanism and can rapidly absorb a residual cleaning liquid on the photovoltaic panel. Thus, residual water droplets and water spots can be avoided, and a cleaning effect can be improved.

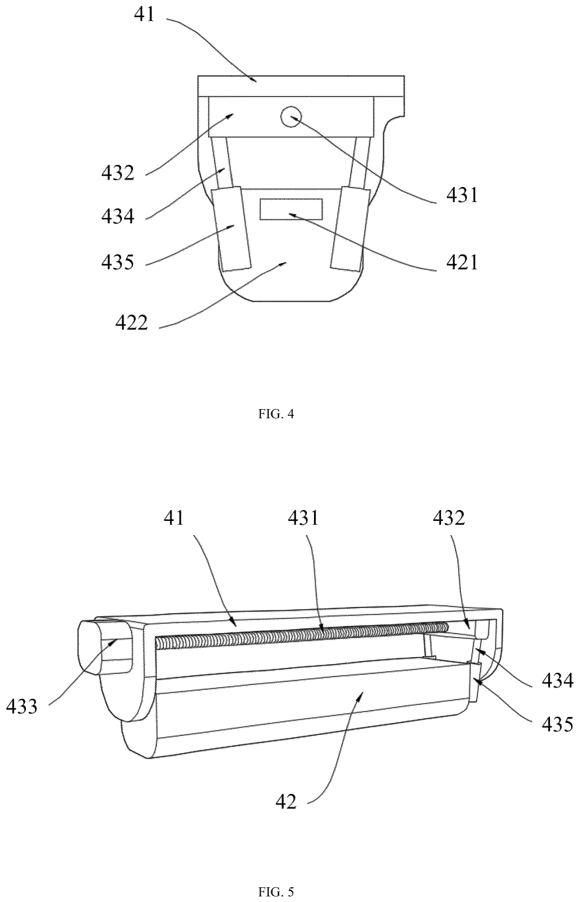

In the embodiment, with reference to FIG. 4, as an optional design, the sponge assembly 42 includes a transverse connection bar 421 and a sponge 422. The transverse connection bar 421 is arranged on the water absorption support frame 41. The sponge 422 is detachably connected to the transverse connection bar 421. The structure is simple, and rapid assembly and disassembly can be performed such that the sponge 422 can be conveniently replaced.

In the embodiment, with reference to FIG. 1, FIG. 3, and FIG. 5, as an optional design, the drainage assembly 43 includes a drainage screw rod 431, a movable block 432, a second electric motor 433, inclined rods 434, and drainage rollers 435. The drainage screw rod 431 is arranged on the water absorption support frame 41 and is located above the sponge assembly 42. The movable block 432 is sleeved on the drainage screw rod 431 and is in threaded connection with the drainage screw rod 431. An output end of the second electric motor 433 is connected to one end of the drainage screw rod 431 and is configured to drive the drainage screw rod 431 to rotate. When the drainage screw rod 431 rotates, the movable block 432 can move in a length extension direction of the drainage screw rod 431. The drainage screw rod 431 is parallel to a length direction of the sponge assembly 42. Two inclined rods 434 are respectively arranged at a front side and a rear side of the movable block 432. One end of each inclined rod 434 is fixedly connected to the movable block 432, and the other end of each inclined rod is connected to a rotatable drainage roller 435. The sponge 422 is located between the two drainage rollers 435. The two drainage rollers 435 are closely fitted to two side surfaces of the sponge 422 respectively. Specifically, when the second electric motor 433 drives the drainage screw rod 431 to rotate, the drainage screw rod 431 can drive the movable block 432 to reciprocate in a length direction of the sponge assembly 42. When the second electric motor 433 rotates forwards, the drainage screw rod 431 drives the movable block 432 to move in a direction close to the second electric motor 433. When the second electric motor 433 rotates backwards, the drainage screw rod 431 drives the movable block 432 to move in a direction far away from the second electric motor 433. When the movable block 432 moves, the movable block 432 drives, by the two inclined rods 434, the two drainage rollers 435 to reciprocally squeeze the sponge assembly 42. Thus, moisture in the sponge assembly 42 can be discharged faster.

In the embodiment, with reference to FIG. 1, FIG. 3, and FIG. 6, as an optional design, the device further includes a drying mechanism 5 arranged at a rear side of the water absorption mechanism 4. The drying mechanism 5 includes a drying support frame 51 for providing support, a distance adjustment assembly 52 for adjusting the distance between the drying mechanism 5 and the water absorption mechanism 4, and a drying assembly 53 for drying the photovoltaic panel. The drying assembly 53 is arranged on the drying support frame 51. The distance adjustment assembly 52 is connected to both the drying support frame 51 and the water absorption support frame 41 and can adjust the distance between the drying support frame 51 and the water absorption support frame 41. After the photovoltaic panel is cleaned by the cleaning mechanism 3 and then water is absorbed by the water absorption structure 4, the photovoltaic panel can be dried by the drying mechanism 5 synchronously such that the surface of the photovoltaic panel can be kept dry. Water marks and dirt are not likely to be deposited on the dried surface of the photovoltaic panel. Solar energy can be more effectively absorbed and converted into electric energy by the photovoltaic panel. Efficiency and energy output of a photovoltaic power station can be improved.

In the embodiment, with reference to FIG. 1, FIG. 3, and FIG. 6, as an optional design, the distance adjustment assembly 52 includes a vertical plate 521, a slide rod 522, a distance adjustment screw rod 523, a third electric motor 524, and a linkage plate 525. The vertical plate 521 is fixedly connected to the water absorption mechanism 4. The linkage plate 525 is fixedly connected to the drying support frame 51. Optionally, the linkage plate 525 is fixedly connected to a top of the drying support frame 51. One end of the slide rod 522 is fixedly connected to the vertical plate 521, and the other end of the slide rod penetrates the linkage plate 525. The slide rod 522 is slidably connected to the linkage plate 525. One end of the distance adjustment screw rod 523 penetrates the vertical plate 521 and is connected to an output end of the third electric motor 524, and the other end of the distance adjustment screw rod penetrates the linkage plate 525. The distance adjustment screw rod 523 is in threaded connection with the linkage plate 525. An axis of the slide rod 522 is parallel to an axis of the distance adjustment screw rod 523. The third electric motor 524 is capable of driving the distance adjustment screw rod 523 to rotate. Specifically, the third electric motor 524 drives the distance adjustment screw rod 523 to rotate, and the distance adjustment screw rod 523 drives, by the linkage plate 525, the drying support frame 51 to slide in a length extension direction of the slide rod 522, to change a distance between the drying support frame 51 and the water absorption support frame 41. When the third electric motor 524 rotates forwards, the distance adjustment screw rod 523 drives, by the linkage plate 525, the drying support frame 51 to move in a direction close to the water absorption mechanism 4. When the third electric motor 524 rotates backwards, the distance adjustment screw rod 523 drives, by the linkage plate 525, the drying support frame 51 to move in a direction far away from the water absorption mechanism 4. Thus, different drying distances required by different working tasks can be satisfied, and it can be ensured that the photovoltaic panel is always in a best drying effect. Moreover, by adjusting the distance between the drying mechanism 5 and the water absorption mechanism 4, it can be ensured that a surface of the water absorption mechanism 4 after water absorption can be effectively covered with hot air of the drying mechanism 5. Thus, drying can be rapidly and thoroughly completed. Further, by accurately controlling a drying distance, excessive heating or uneven drying can be avoided. Thus, material performance and service life of the photovoltaic panel can be improved.

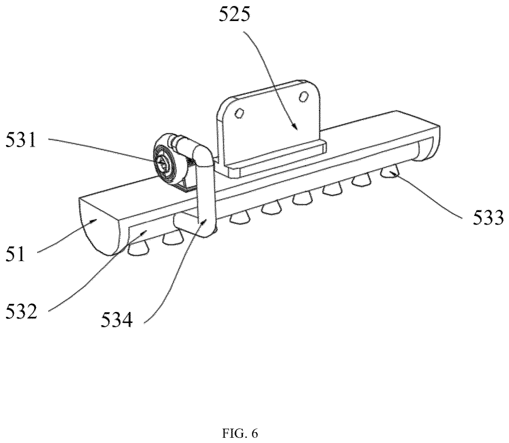

In the embodiment, with reference to FIG. 6, as an optional design, the drying assembly 53 includes an air blower 531, a drying air tube 532, a plurality of drying air nozzles 533, a connection air tube 534, an electric heating wire, and a temperature sensor. The air blower 531 is arranged on the drying support frame 51. One end of the connection air tube 534 is connected to an air outlet end of the air blower 531, and the other end of the connection air tube is connected to the drying air tube 532. The electric heating wire and the temperature sensor are both arranged in the connection air tube 534. The electric heating wire is capable of heating cold air generated when the air blower 531 works, to change the cold air into hot air. Moreover, a temperature of the hot air is measured by the temperature sensor, to make the temperature of the hot air within a proper drying range. Thus, drying safety can be improved, and an effect of drying the photovoltaic panel can be ensured. A length extension direction of the drying air tube 532 is parallel to a length extension direction of the soft brush roller 33 of the cleaning mechanism 3. The plurality of drying air nozzles 533 are arranged on the drying air tube 532 and are uniformly distributed in the length extension direction of the drying air tube 532. After the hot air heated by the electric heating wire is transmitted into the drying air tube 532, the hot air is transmitted, by the drying air nozzles 533, to the surface of the photovoltaic panel after cleaning and water absorption, to dry the surface of the photovoltaic panel. Thus, it can be ensured that the surface of the photovoltaic panel is completely dried, and working efficiency and energy output of the panel can be improved.

In the embodiment, with reference to FIG. 1, as an optional design, the unmanned vehicle mechanism 1 is set to be a robot with caterpillar tracks. The robot with caterpillar tracks has an excellent movement ability, maneuverability, and an adaptability to a complex ground, is easy to control, has a large traction force, and is not likely to slip.

In the embodiment, with reference to FIG. 1, as an optional design, the multi-joint robot arm 2 is set to be a three-joint robot arm, is suitable for working almost at any track or at any angle, and can be freely programmed to complete automated work, thereby improving working efficiency and reducing an error rate.

As mentioned above, the device for cleaning a photovoltaic panel involved in the present disclosure has beneficial effects as follows:
1. By arranging an unmanned vehicle mechanism 1, a multi-joint robot arm 2, and a cleaning mechanism 3, cleaning work is no longer limited by weather, working time, and other factors, all-weather cleaning can be achieved, and cleaning efficiency can be greatly improved. Moreover, the multi-joint robot arm 2 can work almost on any track or at any angle such that the cleaning mechanism 3 can clean all areas of a photovoltaic panel, and uniformity of cleaning the photovoltaic panel can be greatly improved. A surface of the photovoltaic panel cannot be damaged by a soft brush roller 33 and a spraying assembly 34 of the cleaning mechanism 3 such that service life of the photovoltaic panel can be prolonged. Further, dust, dirt, and other pollutants can be more thoroughly removed such that high-efficiency output of the photovoltaic panel can be kept.
2. By arranging the water absorption mechanism 4, it is ensured that a waste liquid can be rapidly removed and the photovoltaic panel can be kept dry after the photovoltaic panel is cleaned by using the cleaning mechanism 3. A waste liquid that does not fall off can be absorbed by a sponge assembly 42, such that residual water droplets or water spots are avoided, and a cleaning effect ensured. When a large amount of moisture is stored in the sponge assembly 42, the moisture in the sponge assembly 42 can be drained by using the drainage assembly 43. Thus, not only can the waste liquid be rapidly treated, but also the surface of the photovoltaic panel can be effectively kept dry, to prevent residual water droplets or residual water spots. Moreover, a requirement for manual operation is reduced, the cleaning efficiency is improved, and operating costs are reduced.
3. The photovoltaic panel is dried with hot air by using a drying mechanism 5 such that the surface of the photovoltaic panel can be ensured to be completely dry. Thus, residual water droplets or residual water spots can be effectively avoided, the photovoltaic panel can be kept clean, and further efficiency and energy output of a photovoltaic system can be improved. Water marks and dirt are not likely to be deposited on the dried surface of the photovoltaic panel such that a cleaning interval can be prolonged, and cleaning frequency and cleaning costs can be reduced. Moreover, the photovoltaic panel can be kept clean and dry by using the drying mechanism 5 such that solar energy can be more effectively absorbed and converted into electric energy by the photovoltaic panel, and reliability and stability of an entire energy system can be improved. Further, the requirement for manual operation is reduced by using the drying mechanism 5, the cleaning efficiency can be further improved, and the operating costs can be further reduced.

To sum up, the present disclosure effectively overcomes various defects in the prior art and therefore has high industrial utilization value.

The above embodiments are merely illustrative of the principles and effects of the present disclosure, and are not intended to limit the present disclosure. Any person skilled in the art can modify and change the above embodiments without departing from the spirit and scope of the present disclosure. Therefore, all equivalent modifications or changes made by a person with ordinary knowledge in the technical field without departing from the spirit and technical ideas disclosed in the present disclosure shall still be covered by the claims of the present disclosure.

## Claims

1. A device for cleaning a photovoltaic panel, capable of automatically cleaning the photovoltaic panel by using a cleaning liquid, comprising an unmanned vehicle mechanism (1), a multi-joint robot arm (2), and a cleaning mechanism (3), wherein one end of the multi-joint robot arm (2) is arranged on the unmanned vehicle mechanism (1), and the other end of the multi-joint robot arm is connected to the cleaning mechanism (3); and the cleaning mechanism (3) comprises a cleaning support frame (31) for providing support, a first electric motor (32) for providing power, a soft brush roller (33) for cleaning the photovoltaic panel, and a spraying assembly (34) for spraying the cleaning liquid, the first electric motor (32), the soft brush roller (33), and the spraying assembly (34) are all arranged on the cleaning support frame (31), an output end of the first electric motor (32) is connected to the soft brush roller (33) and is configured to drive the soft brush roller (33) to rotate, and the spraying assembly (34) is capable of spraying the cleaning liquid onto the soft brush roller (33).

2. The device for cleaning a photovoltaic panel according to claim 1, wherein the spraying assembly (34) comprises a liquid storage tank (341), a micro pump (342), a connection tube (343), a liquid outlet tube (344), and a plurality of liquid outlet nozzles (345), the liquid storage tank (341) is arranged on the cleaning support frame (31), the micro pump (342) is arranged on the liquid storage tank (341), an inlet end of the micro pump (342) is in communication with the liquid storage tank (341), one end of the connection tube (343) is connected to an outlet end of the micro pump (342), the other end of the connection tube is connected to the liquid outlet tube (344), a length direction of the liquid outlet tube (344) is parallel to a length direction of the soft brush roller (33), the plurality of liquid outlet nozzles (345) are arranged on the liquid outlet tube (344), and the liquid outlet nozzles (345) are uniformly distributed in a length extension direction of the liquid outlet tube (344).

3. The device for cleaning a photovoltaic panel according to claim 1 or 2, further comprising a water absorption mechanism (4) arranged on a rear side of the cleaning mechanism (3), wherein the water absorption mechanism (4) comprises a water absorption support frame (41), a sponge assembly (42), and a drainage assembly (43), the sponge assembly (42) and the drainage assembly (43) are both arranged on the water absorption support frame (41), the water absorption support frame (41) is fixedly connected to a rear side of the cleaning support frame (31), the sponge assembly (42) is connected to the water absorption support frame (41), the sponge assembly (42) is capable of absorbing the cleaning liquid on the photovoltaic panel, and the drainage assembly (43) is capable of draining the cleaning liquid absorbed in the sponge assembly (42).

4. The device for cleaning a photovoltaic panel according to claim 3, wherein the sponge assembly (42) comprises a transverse connection bar (421) and a sponge (422), the transverse connection bar (421) is arranged on the water absorption support frame (41), and the sponge (422) is detachably connected to the transverse connection bar (421).

5. The device for cleaning a photovoltaic panel according to claim 4, wherein the drainage assembly (43) comprises a drainage screw rod (431), a movable block (432), a second electric motor (433), inclined rods (434), and drainage rollers (435), the drainage screw rod (431) is arranged on the water absorption support frame (41) and located above the sponge assembly (42), the movable block (432) is sleeved on the drainage screw rod (431) and is in threaded connection with the drainage screw rod (431), an output end of the second electric motor (433) is connected to one end of the drainage screw rod (431) and is configured to drive the drainage screw rod (431) to rotate, and when the drainage screw rod (431) rotates, the movable block (432) is capable of moving in a length extension direction of the drainage screw rod (431), the drainage screw rod (431) is parallel to a length direction of the sponge assembly (42), two inclined rods (434) are respectively arranged at a front side and a rear side of the movable block (432), one end of each inclined rod (434) is fixedly connected to the movable block (432), the other end of each inclined rod is connected to a rotatable drainage roller (435), the sponge (422) is located between the two drainage rollers (435), and the two drainage rollers (435) are closely fitted to two side surfaces of the sponge (422) respectively.

6. The device for cleaning a photovoltaic panel according to claim 5, further comprising a drying mechanism (5) arranged at a rear side of the water absorption mechanism (4), wherein the drying mechanism (5) comprises a drying support frame (51) for providing support, a distance adjustment assembly (52) for adjusting a distance between the drying mechanism (5) and the water absorption mechanism (4), and a drying assembly (53) for drying the photovoltaic panel, the drying assembly (53) is arranged on the drying support frame (51), and the distance adjustment assembly (52) is connected to both the drying support frame (51) and the water absorption support frame (41) and is capable of adjusting a distance between the drying support frame (51) and the water absorption support frame (41).

7. The device for cleaning a photovoltaic panel according to claim 6, wherein the distance adjustment assembly (52) comprises a vertical plate (521), a slide rod (522), a distance adjustment screw rod (523), a third electric motor (524), and a linkage plate (525), the vertical plate (521) is fixedly connected to the water absorption mechanism (4), the linkage plate (525) is fixedly connected to the drying support frame (51), one end of the slide rod (522) is fixedly connected to the vertical plate (521), the other end of the slide rod penetrates the linkage plate (525), the slide rod (522) is slidably connected to the linkage plate (525), one end of the distance adjustment screw rod (523) penetrates the vertical plate (521) and is connected to an output end of the third electric motor (524), the other end of the distance adjustment screw rod penetrates the linkage plate (525), the distance adjustment screw rod (523) is in threaded connection with the linkage plate (525), an axis of the slide rod (522) is parallel to an axis of the distance adjustment screw rod (523), and the third electric motor (524) is capable of driving the distance adjustment screw rod (523) to rotate.

8. The device for cleaning a photovoltaic panel according to claim 6, wherein the drying assembly (53) comprises an air blower (531), a drying air tube (532), a plurality of drying air nozzles (533), a connection air tube (534), an electric heating wire, and a temperature sensor, the air blower (531) is arranged on the drying support frame (51), one end of the connection air tube (534) is connected to an air outlet end of the air blower (531), the other end of the connection air tube is connected to the drying air tube (532), the electric heating wire and the temperature sensor are both arranged in the connection air tube (534), a length extension direction of the drying air tube (532) is parallel to a length extension direction of the soft brush roller (33) of the cleaning mechanism (3), and the plurality of drying air nozzles (533) are arranged on the drying air tube (532) and are uniformly distributed in the length extension direction of the drying air tube (532).

9. The device for cleaning a photovoltaic panel according to claim 1, wherein the unmanned vehicle mechanism (1) is set to be a robot with caterpillar tracks.

10. The device for cleaning a photovoltaic panel according to claim 1, wherein the multi-joint robot arm (2) is set to be a three-joint robot arm.
